(19) Europäisches Patentamt
European Patent Office
Office européen des brevets

(11) **EP 0 790 215 B1**

(12) **EUROPÄISCHE PATENTSCHRIFT**

(45) Veröffentlichungstag und Bekanntmachung des Hinweises auf die Patenterteilung:
**29.12.1999 Patentblatt 1999/52**

(51) Int. Cl.[6]: **C01F 7/00**, C01F 7/02, C01F 7/42, C09K 3/14, B24C 11/00

(21) Anmeldenummer: **97102386.6**

(22) Anmeldetag: **14.02.1997**

(54) **Kugelförmige metalloxidische Pulverpartikel und Verfahren zu ihrer Herstellung**

Spherical metal oxide powder particles and process for the preparation thereof

Particules pulvérulentes sphériques d'oxide métallique et leur procédé de préparation

(84) Benannte Vertragsstaaten:
**DE FR IT**

(30) Priorität: **15.02.1996 DE 19605536**
**15.02.1996 DE 19605556**

(43) Veröffentlichungstag der Anmeldung:
**20.08.1997 Patentblatt 1997/34**

(73) Patentinhaber: **RW silicium GmbH**
**94060 Pocking (DE)**

(72) Erfinder:
• **Feige, Reinhard**
**53225 Bonn (DE)**
• **Bramsiepe, Friedhelm**
**94060 Pocking (DE)**

(74) Vertreter:
**Müller-Wolff, Thomas, Dipl.-Ing. et al**
**HARWARDT NEUMANN**
**Patent- und Rechtsanwälte,**
**Brandstrasse 10**
**53721 Siegburg (DE)**

(56) Entgegenhaltungen:
**EP-A- 0 387 748      EP-A- 0 601 453**
**EP-A- 0 677 326      BE-A- 538 477**
**DE-A- 1 941 011      DE-C- 3 147 597**

• **JOURNAL OF MATERIALS SCIENCE (LETTERS), Bd. 16, 1981, Seiten 1716-1719, XP002032012 G.P. VISSOKOV ET AL.: "Chemical preparation of ultra-fine aluminium oxide by electric arc plasma."**

## Beschreibung

Die Erfindung betrifft kugelförmige metalloxidische Pulverpartikel, die als feinkörnige Roh- und Füllstoffe in mineralischen, keramischen und feuerfesten Bau-, Werk- und Hilfsstoffen sowie als Polier- und Schleifmittel eingesetzt werden, ein Verfahren zur Herstellung derartiger Pulverpartikel und die Anwendung dieses Verfahrens zur Aufarbeitung keramischer und feuerfester Reststoffe.

Keramische und feuerfeste Reststoffe werden nach dem Stand der Technik durch Sortieren, Zerkleinern und Klassieren aufbereitet. Bei ausreichender Reinheit kann ein Recycling erfolgen, sonst bleibt nur die Entsorgung auf einer Deponie.

Besondere Schwierigkeiten bei der mechanischen Aufarbeitung bereiten Reststoffe, bei denen Verwachsungen mit metallischem Aluminium, Silizium und Magnesium vorliegen, wie sie bei Schmelz- und Gießanlagen der Aluminiumindustrie auftreten, wie z.B. metallinfiltrierter, feuerfester Ofenausbruch oder Ausbruch von keramischen Flüssigmetallfiltern oder metallhaltige Krätzen. Letztere führen nach dem Einschmelzen mit Salzen, bei dem eine teilweise Rückgewinnung des Aluminiums gelingt, und anschließendem Auswaschen der Schmelzsalze mit Wasser erneut zu problembehafteten schlammigen Rückständen, die aufgrund ihres Gehaltes an Aluminumnitrid und metallischen Anteilen von Aluminiumlegierungen Ammoniak und Wasserstoff freisetzen. Problematisch bei der mechanischen Aufarbeitung sind auch Reststoffe von Keramik-Metall-Verbundwerkstoffen (z.B. verstärktes Aluminum mit SiC-Partikeln oder $Al_2O_3$-Fasern und Si-infiltriertes SiC).

Bei mineralischen, keramischen und feuerfesten Bau- und Werkstoffen ist die mechanische Festigkeit wichtig. Sie wird beeinflußt durch die Größe und Form der Defektstellen im Gefüge. Es wird daher angestrebt, bei Bau- und Werkstoffen, die aus Pulvern hergestellt werden, die Größe und Form der Defekte dadurch zu minimieren, daß Pulverpartikel in möglichst feiner Teilchengröße und möglichst in Kugelform eingesetzt werden. Da die Pulver bei der Verarbeitung in der Regel mit Wasser versetzt werden, sind kugelförmige Pulverpartikel mit enger Teilchengrößenverteilung besonders in Bezug auf das rheologische Verhalten ideal.

Bei feuerfesten Anwendungen, werden außer der mechanischen Festigkeit auch Temperaturbeständigkeit, Wärmeisolierfestigkeit, Temperaturwechselbeständigkeit und Korrosionsbeständigkeit gefordert. Hier werden auch metalloxidische Werkstoffe auf Basis von Mullit, Spinell und Calciumaluminaten verwendet. In Bezug auf die Wärmeisolierfähigkeit sind für deren Herstellung Pulverpartikel mit einer Hohlraumstruktur (im Idealfall Hohlkugeln) von besonderem Vorteil.

Nach dem Stand der Technik können metalloxidische Pulverpartikel, die Mullit, Spinell oder Calciumaluminate enthalten oder bilden, hergestellt werden, indem geeignete Rohstoffe feingemahlen, gemischt und zu Formlingen in cm-Größe pelletiert oder verpreßt werden. Anschließend kann in Drehrohr-, Schacht- oder Tunnelöfen gesintert bzw. in Lichtbogenöfen geschmolzen werden. Dabei entstehen stückige Zwischenprodukte > 1 mm, aus denen Pulverpartikel durch nachfolgende Mahlung und Klassierung gewonnen werden. Auf diese Weise hergestellte Pulverpartikel besitzen immer eine splittrige Kornform. Außerdem werden bei einer Mahlung und Klassierung von Pulvern im Bereich unterhalb 5 μm die Grenzen der technischen Möglichkeiten erreicht.

Bekannt sind naßchemische Fällungstechniken (z.B. Sol-Gel), mit denen sich auch kugelförmige metalloxidische Pulver kleiner 5 μm herstellen lassen. Diese Pulver enthalten nach dem Trocknen noch einen erheblichen Anteil an chemisch gebundenem Wasser und müssen daher durch Erhitzen (Calcinieren) in die oxidische Form umgewandelt werden. Beim Calcinieren von Pulverteilchen kleiner 5 μm sind jedoch Agglomerationen und Versinterungen, wodurch sich die Kornform verändert, nicht zu vermeiden.

In der US-A-5 424 260 wird ein Verfahren zur Recyklierung von Aluminiumschmelze beschrieben, wobei nicht-metallische Produkte, wie 40 - 75 Gew.-% $Al_2O_3$, 5 - 20 Gew.-% MgO und 2 - 15 Gew.-% $SiO_2$ anfallen, gegebenenfalls Spurenelemente in Form von Titan, Kupfer, Zink, Kalium, Schwefel, Kalzium und Natrium. Je nach Zusammensetzung der Krätze wird eine Temperatur zwischen 1800 und 3500° F gewählt, um die Bestandteile der Mischung in eine schmelzflüssige Phase zu überführen. Aus der schmelzflüssigen Phase werden entweder amorphe, nicht-kristalline Strukturen durch schnelle Abkühlung oder kristalline Strukturen durch sehr langsame Abkühlung erzielt. Die Produkte lassen sich nach einer Mahlung als Schleifmittel einsetzen.

Es ist weiterhin bekannt, kugelförmige, mineralische Partikel durch Verdüsung von Schmelzen herzustellen. Dabei bilden sich auch Hohlkugeln aus. Ein Nachteil dieser Verfahrenstechnik besteht darin, daß die damit hergestellten Hohlkugeln ein grobes Kornspektrum im mm-Bereich (z.B. 0,5 bis 3 mm) aufweisen, und die Kugelwandung so dünn ist, daß diese leicht zerbricht. Diese Hohlteilchen haben bei der Verarbeitung in zementgebundenen Baustoffen einen hohen Anmachwasserbedarf.

WO-A-9110629 [1] beschreibt ein Verfahren zur Aufarbeitung von Reststoffen der Aluminiumindustrie, wie Aluminiumkrätze, bei denen durch Zugabe von Magnesiumoxid oder Siliziumoxid gesinterte feuerfeste Spinell- oder Mullit-Produkte erzeugt werden und auf eine Partikelgröße von 5 bis 50 μm zerkleinert werden.

In JP-A-63185803 [2] ist ein Verfahren zur Herstellung kugelförmiger metalloxidischer Kompositpulver beschrieben mit > 85 % Teilchen im Bereich von 0,02 bis 0,30 μm Durchmesser. Danach werden pulverförmige Legie-

2

rungen (Mg-Al oder Al-Si oder Mg-Si) in eine Reaktionskammer mit Sauerstoff eingegeben und dort bei 1200°C verdampft. Nach der Abkühlung entstehen sphärische Pulver aus Spinell ($MgO.Al_2O_3$) oder Mullit ($3Al_2O_3.2SiO_2$) oder Forsterit ($2MgO.SiO_2$), die sich für die Herstellung von Pigmenten, Füllstoffen, Sintermaterialien und als Sinterhilfsmittel eignen.

Aus der carbothermischen Gewinnung von Siliziummetall und Siliziumlegierungen sind kondensierte Siliziumoxide bekannt, deren Partikel kugelförmig sind und einen Durchmesser im Bereich von 0,04 bis 0,5 μm, eine spezifische BET-Oberfläche zwischen 6,2 und 18,5 $m^2$/g, sowie eine Dichte von 2,21 bis 3,13 g/$cm^3$ besitzen. (P. Aitcin u.a., Ceramic Bulletin, 63, 1984, 1487-1491) [4].

DE-C-4241625 [5] und EP-A-0601453 [6] beanspruchen ein Verfahren zur Herstellung von sinteraktivem, weitestgehend sphärischem Aluminiumoxid mit einem mittleren Teilchendurchmesser kleiner 1 μm, vorzugsweise kleiner 0,5 μm. Dabei wird ein Aluminiumträger, wie metallisches Aluminium oder Aluminiumoxid in einem Ofen verdampft und nach anschließender Oxidation im Gasstrom in einem Filter ein Aluminiumoxid-Pulver abgeschieden, das eine Dichte von 2,5 bis 3,97 g/$cm^3$ und eine spezifische Oberfläche von 0,5 bis 60 $m^2$/g aufweist.

Aus der EP-A-0 677 326 ist ein Verfahren zur Herstellung eines keramischen Pulvers bekannt, das aus kugelförmigen Teilchen mit einem Kernteil aus gamma-Aluminiumoxid und einem Überzug aus Titanoxid besteht, wobei die Teilchengröße im Bereich von 0,5 - 1,0 μm liegt. Aufgrund der speziellen Herstellungsbedingungen und der Zusammensetzung der Pulverpartikel liegt das Titanoxid des Pulvers in kristalliner Form vor.

Auch in DE-A-19 41 011 werden Verfahren zur Herstellung von Pulvergemischen beschrieben, die aus gamma- und delta-Aluminiumoxid bestehen und keine weiteren oxidischen Zusätze enthalten. Nach BE-A-538 477 wird durch carbothermische Reduktion des Oxids, Verdampfung des Metalls und anschließende Oxidation ein Aluminiumoxidpulver hergestellt, das keine Schmelzphase aufweist. Als Sonderverfahren ist ein mittels Plasmatechnologie hergestelltes gamma-Aluminiumoxidpulver anzusehen, dessen Teilchengröße unter 100 nm liegt und das ebenfalls keine weiteren Oxide enthält (Journal of Materials Science Letters, vol. 16, 1981, Seiten 17.16 - 17.19).

Aufgabe der vorliegenden Erfindung ist es, insbesondere für feuerfeste und wärmedämmende Bau- und Werkstoffe, feinkörnige pulverförmige Roh- und Füllstoffe zu entwickeln, auf Basis von Zusammensetzungen, die im Bereich des hochtemperaturbeständigen Mullits (Schmelzpunkt ca. 1850°C) liegen, und eine geringe Dichte besitzen. Ferner soll die Verarbeitbarkeit der Füllstoffe verbessert werden.

Die Aufgabe wird durch die im Anspruch 1 und 8 angegebenen Merkmale gelöst. Die erfindungsgemäßen Füllstoffe weisen eine hohe Reaktionsfähigkeit aufgrund ihres Gehaltes an Übergangsaluminiumoxiden auf. Dieses Ergebnis war überraschend, da bei der Ausgangszusammensetzung der Einsatzstoffe auf die Bildung kristalliner Verbindungen von $Al_2O_3$ mit $SiO_2$, MgO und CaO abgestellt wurde.

Der Einsatzbereich der Füllstoffe kann durch den vorhandenen Anteil an Übergangsaluminiumoxiden aufgrund der Reaktionsfähigkeit und durch die gute Verarbeitbarkeit bzw. Handhabbarkeit vergrößert werden. Unter Reaktionsfähigkeit wird in diesem Zusammenhang die Abbindegeschwindigkeit von zementgebundenen Baustoffen verstanden und auch die Verbesserung der keramischen Sinteraktivität.

Dieses Ziel wird bevorzugt dadurch erreicht, daß kugelförmige metalloxidische Pulverpartikel hergestellt werden, die bei einer Zusammensetzung von 50 bis 95 Gew.-% $Al_2O_3$ und 5 bis 40 Gew.-% $SiO_2$, einer Teilchengrößenverteilung, bei der mehr als 50 Gew.-% der Partikel im Durchmesserbereich von 0,2 bis 2 μm vorliegen, einen mittleren Teilchendurchmesser zwischen 0,5 und 1 μm, sowie eine spezifische BET-Oberfläche von 3 bis 15 $m^2$/g besitzen. Die aus der spezifischen BET-Oberfläche und dem mittleren Teilchendurchmesser errechnete Dichte beträgt weniger als 1,5 g/$cm^3$.

Aus der spezifischen BET-Oberfläche und der mittleren Teilchengröße läßt sich für kugelförmige Partikel die Dichte nach der Formel

$$D = 6 / O \times d_{50}$$

berechnen. Dabei ist

D        = Dichte in [g/$cm^3$],
O        = spezifische BET-Oberfläche [$m^2$/g],
$d_{50}$  = mittlerer Teilchendurchmesser [μm].

Wie sich aus dem nachfolgenden Beispiel ergibt, haben die erfindungsgemäßen Pulverpartikel danach eine Dichte von kleiner 1,5 g/$cm^3$.

Die exakte Kugelform der Teilchen läßt sich durch Untersuchung mittels Transmissionselektronenmikroskop (TEM) zeigen.

Die Messung der Partikelverteilung erfolgt durch Laserbeugung (Cilas-Granulometer 850; wässrige Dispersion; 0,1 % Na-Pyrophosphat; Ultraschalldispergierung 30 sec.).

Zur Bestimmung der spezifischen BET-Oberfläche wird die Einpunktmessung mittels Ströhlein-Areameter angewendet.

Vorzugsweise besitzen die Partikel eine Kernzone mit Hohlraumstruktur. Dieser Befund wurde durch Anschliffuntersuchungen mittels Rasterelektronenmikroskop (REM) nachgewiesen.

Die nach dem erfindungsgemäßen Verfahren hergestellten Partikel besitzen, wie Röntgenbeugungsmessungen (XRD) zeigen, überraschenderweise die kristalline Struktur des Gamma-Aluminiumoxids, obwohl aufgrund der Zusammensetzung der Teilchen das Vorhandensein kristalliner Verbindungen von Aluminiumoxid mit Siliziumoxid, Magnesiumoxid und Kalziumoxid erwartet werden konnte.

Mit der "Hohlraumstruktur" in der Kernzone ist der Zustand: schwammig, mehrporig oder hohlkugelig der Pulverpartikel beschrieben. Ihre genauen Eigenschaften werden durch die angegebene Dichte und die BET-Oberfläche bestimmt.

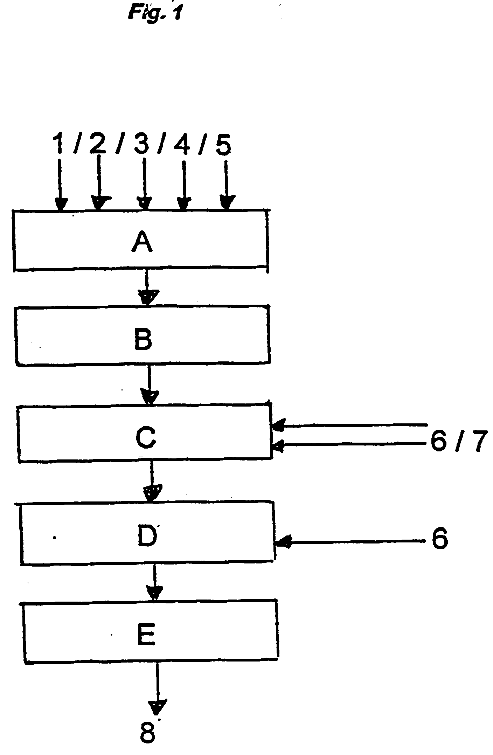

Das erfindungsgemäße Verfahren zur Herstellung der kugelförmigen metalloxidischen Pulverpartikel ist anhand Figur 1 anschaulich dargestellt und besteht aus folgenden Schritten:

1) Oxide des Aluminiums, Siliziums, Magnesiums und Kalziums oder diese Oxide als wesentliche Bestandteile enthaltende Stoffe (natürliche oder synthetische Rohstoffe, wie Bauxit, Sillimanit, Kyanit, Andalusit, Quarz, Schamotte, Mullit, Korund, Magnesit, Kalkstein) werden carbothermisch reduziert und verdampft;

2) die verdampften Produkte werden durch Vermischen mit Luft im Gasstrom oxidiert und als Schmelzeteilchen kondensiert;

3) die Schmelzeteilchen werden im Gasstrom weiter abgekühlt und zu kugelförmigen metalloxidischen Pulverpartikeln erstarrt;

4) die Pulverpartikel werden aus dem Gasstrom über einen Staubfilter abgetrennt.

In dem Ablaufplan nach Figur 1 sind die einzelnen Verfahrensschritte in einem Ausführungsbeispiel wie folgt bezeichnet:

A Einwaage der Rohstoffe
B Carbothermische Reduktion und Verdampfung bei einer Temperatur T > 2000°C
C Oxidation der Verdampfungsprodukte und Kondensation von Schmelzeteilchen
D Weitere Abkühlung der Schmelzeteilchen im Gasstrom und Erstarren von Pulverteilchen
E Staubfilter

Im Verfahrensschritt A werden die Bestandteile 1, 2, 3, 4, 5 als $Al_2O_3$, $SiO_2$, MgO, CaO und Kohlenstoff eingewogen.

Die Verfahrensstufe B wird in einem oben offenen Elektro-Niederschachtofen durchgeführt.

Im Schritt C werden die aus dem Ofen aufsteigenden Verdampfungsprodukte abgesaugt und dabei intensiv mit oxidierenden Gasen 6 und 7 (Luft und Sauerstoff) gemischt und gekühlt.

Im Schritt D wird in das Absaugesystem weitere Luft 6 eingeleitet, wodurch die Partikel weiter abgekühlt werden.

Die Abscheidung der Pulverpartikel 8 erfolgt in dem Staubfilter E.

Für den günstigen Ablauf der carbothermischen Reduktion und die möglichst intensive Verdampfung der Einsatzstoffe hat es sich als vorteilhaft gezeigt, daß als Kohlenstoffträger Petrolkoks verwendet wird, in einer Menge von 15 bis 25 Gew.-%, bezogen auf die Menge der Einsatzstoffe.

Für die Ausbildung der Partikel und deren Teilchengrößenverteilung ist es wichtig, daß nach der Zumischung von Luft die Konzentration der metalloxidischen Pulverpartikel im Gasstrom auf weniger als 20 g/Nm$^3$ verdünnt ist.

Die Hohlraumstruktur der Partikel beruht nach eigenen Beobachtungen auf einer Dichtezunahme beim Übergang vom schmelzflüssigen in den festen Zustand. In Verbindung mit einer schnellen Erstarrung der Teilchen-Außenzone werden in der Kernzone Hohlräume gebildet, die durch Variation der Kondensations- und Erstarrungsbedingungen einstellbar sind.

Dabei hat sich zur Durchführung des Verfahrens ein offener Elektro-Niederschachtofen als geeignet erwiesen, bei dem die Zumischung von Umgebungsluft über das Absaugsystem des Ofens erfolgt.

Das Vorliegen von Übergangs-Aluminiumoxid (Gamma-$Al_2O_3$) in den metalloxidischen Pulverpartikeln ist überraschend, da in Schmelzprodukten, wie Schmelzmullit, Schmelzspinell und Tonerdeschmelzzement, Übergangs-$Al_2O_3$-Phasen nicht auftreten.

Die Abscheidung der Teilchen aus dem Ofenabgasstrom erfolgt zweckmäßigerweise mit einem Schlauchfilter.

Das Verfahren eignet sich hervorragend zur Aufarbeitung keramischer und feuerfester Reststoffe, wenn es sich um Reststoffe auf Basis von $Al_2O_3$, $SiO_2$, AlN, AlON, SiC, $Si_3N_4$, SiAlON und Keramik-Metall-Verbundwerkstoffe (z.B. verstärktes Aluminium mit SiC-Partikeln oder $Al_2O_3$-Fasern, Al-infiltriertes $Al_2O_3$ und Siliziumnitrid-gebundenes SiC oder Si-infiltriertes SiC) handelt.

Auch bereiten Reststoffe, bei denen Verwachsungen mit metallischem Aluminium und Aluminiumlegierungen, die bei Schmelz- und Gießanlagen der Aluminiumindustrie auftreten (wie metallinfiltrierter, feuerfester Ofenausbruch und Ausbruch von keramischen Flüssigmetallfiltern oder metallhaltige Krätzen) keine Schwierigkeiten, selbst wenn die Reststoffe in einer Stückgröße bis zu 50 cm vorliegen.

Weiterhin können stückige feuerfeste Reststoffe verwertet werden, die freien Kohlenstoff enthalten, wie Erzeugnisse auf Basis von Tongraphit, Tonerde-Graphit ($Al_2O_3$-C), z.B. Schmelztiegelbruch und Bruch von Gießerei-Stopfen und -Ausgußsteinen.

**Ausführungsbeispiele:**

Für die Aufarbeitung verschiedener Bettfilter-Reststoffe aus der Filtration von Aluminiummetall (Korund-Kugeln und Korund-Splitt ca. 0,5 - 3 cm, durch anhaftende Metallreste einer AlMgSi-Legierung zu einer Stückgröße von etwa 30 cm verkittet) wird ein oben offener Elektro-Niederschacht-Lichtbogenofen (Durchmesser ca. 7 m) mit Mischungen aus kalziniertem Bauxit Bettfilter-Reststoff, Quarz (Stückgröße etwa 10 cm), Magnesit (Stückgröße ca. 10 cm), Kalkstein (Stückgröße ca. 10 cm) und Petrolkoks (Stückgröße ca. 2 cm) gemäß Versuch Nr. 1 - 6 beschickt. Die Aufgabemenge beträgt 1.500 kg pro Stunde. Die elektrische Leistung des Ofens wird auf 6 MW eingestellt.

Durch die Temperatur des Lichtbogens bilden sich augenblicklich die Verdampfungsprodukte aller Einsatzstoffe. Mittels eines an eine Schlauchfilteranlage gekoppelten Gebläses werden pro Stunde 250.000 $Nm^3$ Abgas enthaltend die Verdampfungsprodukte über dem Ofen abgesaugt. Nach Reoxidation und Kondensation als Schmelzeteilchen durch Vermischen mit Luft werden die erzeugten Pulverteilchen in der Schlauchfilteranlage abgeschieden. Die Menge der abgetrennten Pulverteilchen beträgt etwa 1.000 kg pro Stunde. Daraus ergibt sich eine Konzentration an kondensierten Pulverteilchen von 4 $g/Nm^3$.

Die Beispiele 7 - 9 sind Pulver, die nach dem Stand der Technik erzeugt wurden, durch Feinmahlung der Ausgangsstoffe, Mischen, Brikettieren, Trocknen, Calcinieren, Schmelzen, Abkühlen und anschließendes Brechen, Mahlen und Klassieren der stückig erstarrten Schmelzprodukte.

Die Untersuchung der Pulverteilchen ergibt:

| Versuch | | 1 | 2 | 3 | 4 | 5 | 6 | 7 | 8 | 9 |
|---|---|---|---|---|---|---|---|---|---|---|
| **Einsatzstoffe** | | | | | | | | | | |
| kalzinierter Bauxit | % | 0 | 0 | 0 | 40 | 40 | 0 | 75 | 50 | 50 |
| Bettfilter-Reststoff | % | 80 | 60 | 40 | 0 | 0 | 70 | 0 | 0 | 0 |
| Quarz | % | 0 | 20 | 40 | 0 | 0 | 0 | 25 | 0 | 0 |
| Magnesit MgCO3 | % | 0 | 0 | 0 | 40 | 0 | 0 | 0 | 50 | 0 |
| Kalkstein CaCO3 | % | 0 | 0 | 0 | 0 | 40 | 10 | 0 | 0 | 50 |
| Petrolkoks | % | 20 | 20 | 20 | 20 | 20 | 20 | 0 | 0 | 0 |
| | | | | | | | | | | |
| **Chemische Zusammensetzung** | | | | | | | | | | |
| Al2O3 | % | 85,3 | 65,9 | 42,4 | 60,9 | 62,1 | 80,1 | 68,5 | 61,4 | 65,2 |
| SiO2 | % | 10,7 | 28,9 | 54,1 | 3,9 | 2,8 | 8,4 | 28,9 | 3,8 | 2,4 |
| MgO | % | 2,8 | 2,6 | 1,3 | 31,8 | 1,6 | 3,2 | 0,1 | 33,7 | 0,8 |
| CaO | % | 0,5 | 0,9 | 0,2 | 0,7 | 30,5 | 5,8 | 0,1 | 0,2 | 29,8 |
| Fe2O3 | % | 0,3 | 0,6 | 0,1 | 0,4 | 0,3 | 0,3 | 0,5 | 0,4 | 0,7 |
| Na2O | % | 0,3 | 0,3 | 0,4 | 0,2 | 0,2 | 0,4 | 0,4 | 0,3 | 0,6 |
| K2O | % | 0,1 | 0,2 | 0,8 | 0,1 | 0,1 | 0,6 | 0,3 | 0,2 | 0,5 |
| C | % | 1,8 | 1,3 | 0,7 | 1,9 | 2,4 | 1,4 | – | – | – |
| | | | | | | | | | | |
| **Mineralogische Hauptbestandteile (XRD)** | | | | | | | | | | |
| Gamma-Al2O3 | | + | + | + | + | + | + | | | |
| Mullit 3Al2O3.2SiO2 | | | | | | | | + | | |
| Spinell MgO.Al2O3 | | | | | | | | | + | |
| Ca-Aluminat CaO.Al2O3 | | | | | | | | | | + |
| glasig-amorph | | + | + | + | + | + | + | | | |
| | | | | | | | | | | |
| BET-Oberfläche | m²/g | 6,0 | 8,2 | 11,2 | 7,4 | 7,7 | 5,4 | 2,8 | 1,9 | 3,1 |
| | | | | | | | | | | |
| **Teilchengröße (Lasergranulometer)** | | | | | | | | | | |
| größer 2 µm | % | 27,2 | 22,7 | 45,2 | 24,6 | 25,3 | 27,1 | 15,4 | 24,6 | 19,7 |
| größer 0,2 µm | % | 98,2 | 98,4 | 99,2 | 97,3 | 98,1 | 98,8 | 80,2 | 85,1 | 84,2 |
| d50 | µm | 0,8 | 0,7 | 1,6 | 0,8 | 0,9 | 0,9 | 0,7 | 0,9 | 0,8 |
| | | | | | | | | | | |
| **Kornform (TEM)** | | | | | | | | | | |
| kugelig | | + | + | + | + | + | + | | | |
| splittrig | | | | | | | | + | + | + |
| Teilchendichte | g/cm³ | 1,3 | 1,0 | 0,3 | 1,0 | 0,9 | 1,2 | 3,1 | 3,6 | 3,2 |
| | | | | | | | | | | |
| **Verarbeitbarkeit** | | | | | | | | | | |
| Faktor Wasser/Pulvervolumen | | 0,9 | 0,9 | 0,5 | 0,9 | 0,7 | 0,8 | 1,5 | 1,4 | 1,6 |

## Patentansprüche

**1.** Kugelförmige metalloxidische Pulverpartikel, enthaltend 35 - 95, vorzugsweise 50 - 90 Gew.-% $Al_2O_3$ sowie mindestens eines der folgenden Oxide: $SiO_2$, $MgO$, $CaO$ im Rest,
dadurch gekennzeichnet,
daß

a) die Partikel eine kristalline Phase, die überwiegend aus einem Übergangs-Aluminiumoxid besteht,
b) und eine glasig-amorph erstarrte Schmelzphase aufweisen, wobei
c) die Partikel eine Größenverteilung besitzen, bei der mehr als 50 Gew.-% im Durchmesserbereich von 0,2 - 20 µm liegen und wobei
d) die Partikel zusätzlich einen Kohlenstoffgehalt von 0,1 - 3 Gew.-% enthalten.

**2.** Kugelförmige metalloxidische Pulverpartikel nach Anspruch 1,
dadurch gekennzeichnet,
daß 90 % der kristallinen Phase aus einem Übergangsaluminiumoxid besteht.

**3.** Kugelförmige metalloxidische Pulverpartikel nach einem der vorhergehenden Ansprüche,
dadurch gekennzeichnet,
daß die Partikel eine Größenverteilung besitzen, bei der mehr als 60 Gew.-% im Durchmesserbereich von 0,2 bis 2 $\mu$m liegen.

**4.** Kugelförmige metalloxidische Pulverpartikel nach Anspruch 1,
dadurch gekennzeichnet,
daß sie eine Kernzone mit Hohlraumstruktur und eine geschlossene Randzone besitzen, deren Dicke im Bereich zwischen 10 - 30 % des Partikeldurchmessers liegt.

**5.** Kugelförmige metalloxidische Pulverpartikel nach einem der vorhergehenden Ansprüche,
dadurch gekennzeichnet,
daß sie einen mittleren Teilchendurchmesser zwischen 0,5 und 1 $\mu$m besitzen.

**6.** Kugelförmige metalloxidische Pulverpartikel nach einem der vorhergehenden Ansprüche,
dadurch gekennzeichnet,
daß sie eine spezifische BET-Oberfläche von 3 bis 15 m$^2$/g aufweisen.

**7.** Kugelförmige metalloxidische Pulverpartikel nach einem der vorhergehenden Ansprüche,
dadurch gekennzeichnet,
daß sie eine aus der spezifischen BET-Oberfläche und dem mittleren Teilchendurchmesser errechnete Dichte von kleiner 1,5 g/cm$^3$ besitzen.

**8.** Verfahren zur Herstellung kugelförmiger metalloxidischer Pulverpartikel nach einem der vorhergehenden Ansprüche,
dadurch gekennzeichnet, daß

a) als Einsatzstoffe Aluminiumoxid und mindestens eines der folgenden Oxide: SiO$_2$ MgO, CaO carbothermisch reduziert und verdampft werden;
b) die verdampften Produkte durch Vermischen mit Luft oder Sauerstoff im Gasstrom oxidiert und als Schmelzeteilchen kondensiert werden;
c) die Schmelzeteilchen im Gasstrom weiter abgekühlt und zu kugelförmigen metalloxidischen Pulverpartikeln erstarrt werden;
d) die Pulverpartikel aus dem Gasstrom über einen Staubfilter abgetrennt werden.

**9.** Verfahren nach Anspruch 8,
dadurch gekennzeichnet,
daß zur Verdampfung ein offener Elektro-Niederschachtofen verwendet wird, bei dem eine dosierte Zumischung von oxidierenden Gasen, Inertgasen und von Umgebungsluft über das Absaugsystem des Ofens erfolgt.

**10.** Verfahren nach einem der Ansprüche 8 bis 9,
dadurch gekennzeichnet,
daß als Kohlenstoffträger bei der carbothermischen Reduktion Petrolkoks verwendet wird, in einer Menge von 15 bis 30 Gew.-%, bezogen auf die Menge der Einsatzstoffe.

**11.** Verfahren nach einem der Ansprüche 8 bis 10,
dadurch gekennzeichnet,
daß nach der Zumischung von Luft oder Sauerstoff die Konzentration der metalloxidischen Pulverpartikel im Gasstrom weniger als 20 g/Nm$^3$ beträgt.

**12.** Verfahren nach einem der Ansprüche 9 bis 12,
dadurch gekennzeichnet,
daß als Einsatzstoffe keramische und feuerfeste Reststoffe angewendet werden, die Oxide, Nitride und/oder Carbide des Aluminiums und Siliziums enthalten.

13. Verfahren nach Anspruch 12,
dadurch gekennzeichnet,
daß die Einsatzstoffe metallisches Aluminium und dessen Legierungsbestandteile enthalten.

14. Verfahren nach einem der Ansprüche 12 bis 13,
dadurch gekennzeichnet,
daß die Einsatzstoffe freien Kohlenstoff enthalten.

15. Verfahren nach einem der vorhergehenden Ansprüche,
dadurch gekennzeichnet,
daß die Einsatzstoffe ohne vorherige Zerkleinerung direkt in die Gasphase überführt werden.

16. Verfahren nach einem der vorhergehenden Ansprüche,
dadurch gekennzeichnet,
daß die Einsatzstoffe in einem Lichtbogen schlagartig auf eine Temperatur über 2000°C erhitzt, reduziert und verdampft werden.

17. Verfahren nach einem der vorhergehenden Ansprüche,
dadurch gekennzeichnet,
daß die Reoxidation und Kondensation der Teilchen innerhalb von 0,5 - 2,5 Sekunden erfolgt.

18. Verwendung von kugelförmigen metalloxidischen Pulverpartikeln, hergestellt nach einem der vorhergehenden
Ansprüche als Strahlmittel für die Oberflächenbearbeitung von metallischen, mineralischen und keramischen
Werkstoffen.

19. Verwendung von kugelförmigen metalloxidischen Pulverpartikeln gemäß einem der vorhergehenden Ansprüche
als Poliermittel in einer bindemittelhaltigen Paste.

**Claims**

1. Spherical metal oxide powder particles containing 35 - 95 percent by weight, preferably 50 - 90 percent by weight
$Al_2O_3$ ,and at least one of the following oxides: $SiO_2$, MgO, CaO in the balance,
characterised in
that

    a) the particles contain a crystalline phase which largely consists of a transition aluminium oxide
    b) and a glassy-amorphously solidified melt phase, with
    c) the particles being distributed in respect of size in such a way that in excess of 50 percent by weight fall
    within the diameter range of 0.2 to 20 $\mu$m and with
    d) the particles additionally comprising a carbon content of 0.1 - 3 percent by weight.

2. Spherical metal oxide powder particles according to claim 1,
characterised in
that 90 % of the crystalline phase consists of a transition alumina.

3. Spherical metal oxide powder particles according to any one of the preceding claims,
characterised in
that the particles are distributed in respect of size in such a way that in excess of 60 percent by weight fall within
the diameter range of 0.2 to 2 $\mu$m.

4. Spherical metal oxide powder particles according to claim 1,
characterised in
that the core zone comprises a cavity structure and a closed surface zone whose thickness ranges between 10 -
30 % of the particle diameter.

5. Spherical metal oxide powder particles according to any one of the preceding claims,

characterised in
that the mean particle diameter ranges between 0.5 and 1 μm.

6. Spherical metal oxide powder particles according to any one of the preceding claims,
   characterised in
   that they comprise a specific BET surface of 3 to 15 m$^2$/g.

7. Spherical metal oxide powder particles according to any one of the preceding claims,
   characterised in
   that they comprise a density smaller than 1.5 g/cm$^3$, which is calculated from the specific BET surface and the mean particle diameter.

8. A process for producing spherical metal oxide powder particles according to any one of the preceding claims,
   characterised in

   a) that charging materials in the form of aluminium oxide and at least one of the following oxides, i.e. SiO$_2$, MgO and CaO, are carbo-thermally reduced and evaporated;
   b) that, by mixing the evaporated products with air or oxygen, they are oxidised in the gas flow and condensed as melt particles; and
   c) that the melt particles continue to be cooled in the gas flow and solidified into spherical metal oxide powder particles; and
   d) that the powder particles are separated from the gas flow by a dust filter.

9. A process according to claim 8,
   characterised in
   that for evaporating purposes, there is used an electric low-shaft furnace wherein metered amounts of oxidising gases, inert gases and ambient air are added via the exhausting system of the furnace.

10. A process according to any one of claims 8 to 9,
    characterised in
    that the carbon carrier during the carbo-thermal reduction process is petroleum coke used in a quantity of 15 to 30 percent by weight with reference to the quantity of charging materials.

11. A process according to any one of claims 8 to 10,
    characterised in
    that after air or oxygen have been added, the concentration of the metal oxide power particles in the gas flow is less than 20 g/Nm$^3$.

12. A process according to any one of claims 9 to 12,
    characterised in
    that charging materials are used in the form of ceramic and refractory residual materials which contain oxides, nitrides and/or carbides of the aluminium and silicon.

13. A process according to claim 12,
    characterised in
    that the charging materials contain metallic aluminium and its alloying elements.

14. A process according to any one of claims 12 to 13,
    characterised in
    that the charging materials contain free carbon.

15. A process according to any one of the preceding claims,
    characterised in
    that the charging materials are transferred directly into the gas phase without first being reduced in size.

16. A process according to any one of the preceding claims,
    characterised in

that the charging materials are abruptly heated by an electric arc to a temperature in excess of 2000 °C , reduced and evaporated.

17. A process according to any one of the preceding claims,
characterised in
that re-oxidation and condensation of the particles takes place within 0.5 to 2.5 seconds.

18. Using spherical metal oxide powder particles produced in accordance with any one of the preceding claims as a blasting medium for the surface treatment of metallic, mineral and ceramic materials.

19. Using spherical metal oxide powder particles according to any one of the preceding claims as polishing agents in a paste containing a bonding agent.

## Revendications

1. Particules sphériques de poudre d'oxyde métallique contenant de 35 à 95, de préférence de 50 à 90 % en poids d'$Al_2O_3$ ainsi que, dans le reste, au moins l'un des oxydes suivants : $SiO_2$, MgO, CaO, caractérisées en ce que

   a) les particules présentent une phase cristalline qui se compose majoritairement d'un oxyde d'aluminium de transition,
   b) et une phase de fusion solidifiée sous une forme vitreuse amorphe,
   c) les particules ayant une distribution des tailles dans laquelle plus de 50 % en poids d'entre elles se situent dans la plage de diamètre de 0,2 à 20 $\mu$m, et
   d) les particules contenant en plus une teneur en carbone de 0,1 à 3 % en poids.

2. Particules sphériques de poudre d'oxyde métallique selon la revendication 1, caractérisées en ce que 90 % de la phase cristalline se compose d'un oxyde d'aluminium de transition.

3. Particules sphériques de poudre d'oxyde métallique selon l'une des revendications précédentes, caractérisées en ce que les particules ont une distribution des tailles dans laquelle plus de 60 % en poids d'entre elles se situent dans la plage de diamètre de 0,2 à 2 $\mu$m.

4. Particules sphériques de poudre d'oxyde métallique selon la revendication 1, caractérisées en ce qu'elles possèdent une zone centrale avec une structure poreuse et une zone périphérique fermée dont l'épaisseur se situe dans la plage de 10 à 30 % du diamètre de particule.

5. Particules sphériques de poudre d'oxyde métallique selon l'une des revendications précédentes, caractérisées en ce qu'elles possèdent un diamètre de particule moyen de 0,5 à 1 $\mu$m.

6. Particules sphériques de poudre d'oxyde métallique selon l'une des revendications précédentes, caractérisées en ce qu'elles présentent une aire de surface spécifique BET de 3 à 15 $m^2$/g.

7. Particules sphériques de poudre d'oxyde métallique selon l'une des revendications précédentes, caractérisées en ce qu'elles possèdent une densité, calculée à partir de l'aire de surface spécifique BET et du diamètre de particule moyen, inférieure à 1,5 g/$cm^3$.

8. Procédé de préparation de particules sphériques de poudre d'oxyde métallique selon l'une des revendications précédentes, caractérisé en ce que

   a) on réduit par voie carbothermique et on vaporise comme matériaux de départ de l'oxyde d'aluminium et au moins l'un des oxydes suivants : $SiO_2$, MgO, Cao ;
   b) on oxyde les produits vaporisés en les mélangeant avec de l'air ou de l'oxygène dans un courant gazeux et on les condense sous la forme de particules fondues ;
   c) on refroidit encore les particules fondues dans le courant gazeux et on les solidifie sous la forme de particules sphériques de poudre d'oxyde métallique ;
   d) on sépare les particules de poudre du courant gazeux par l'intermédiaire d'un filtre à poussières.

9. Procédé selon la revendication 8, caractérisé en ce que l'on utilise pour la vaporisation un bas fourneau électrique dans lequel s'effectue un mélangeage dosé de gaz oxydants, de gaz inertes et d'air ambiant par l'intermédiaire du système d'aspiration du fourneau.

10. Procédé selon l'une des revendications 8 à 9, caractérisé en ce que, pour la réduction carbothermique, on utilise comme support carboné du coke de pétrole en une quantité de 15 à 30 % en poids, ramenée à la quantité des matériaux de départ.

11. Procédé selon l'une des revendications 8 à 10, caractérisé en ce que, après le mélangeage de l'air ou de l'oxygène, la concentration des particules de poudre d'oxyde métallique dans le courant gazeux est inférieure à 20 g/Nm$^3$.

12. Procédé selon l'une des revendications 9 à 12, caractérisé en ce que l'on utilise comme matériaux de départ des résidus céramiques et réfractaires contenant des oxydes, des nitrures et/ou des carbures d'aluminium et de silicium.

13. Procédé selon la revendication 12, caractérisé en ce que les matériaux de départ contiennent de l'aluminium métallique et des composants d'alliage de celui-ci.

14. Procédé selon l'une des revendications 12 à 13, caractérisé en ce que les matériaux de départ contiennent du carbone libre.

15. Procédé selon l'une des revendications précédentes, caractérisé en ce que les matériaux de départ sont convertis directement en phase gazeuse sans broyage préalable.

16. Procédé selon l'une des revendications précédentes, caractérisé en ce que les matériaux de départ sont portés brusquement dans un arc électrique à une température supérieure à 2000 °C, réduits et vaporisés.

17. Procédé selon l'une des revendications précédentes, caractérisé en ce que la réoxydation et la condensation des particules se fait en 0,5 à 2,5 secondes.

18. Utilisation de particules sphériques de poudre d'oxyde métallique préparées selon l'une des revendications précédentes comme produits de grenaillage pour le travail des surfaces de matériaux métalliques, minéraux et céramiques.

19. Utilisation de particules sphériques de poudre d'oxyde métallique préparées selon l'une des revendications précédentes comme produits de polissage dans une pâte contenant un liant.

*Fig. 1*